# EUROPEAN PATENT APPLICATION

(11) **EP 4 811 472 A1**
(43) Date of publication of application: **23.09.2026**
(21) Application number: 26165924.7
(22) Date of filing: 19.03.2026
(51) Int. Cl.: H01M 8/04537, G01R 31/50, H01M 8/04664, H01R 13/46

(54) **CONTACT MODULE FOR MONITORING A FUEL CELL STACK, SET WITH CONTACT MODULES AND FUEL CELL SYSTEM**

(30) Priority: 21.03.2025 DE 102025111118
(71) Applicant: TE Connectivity Solutions GmbH, 8200 Schaffhausen (CH)
(72) Inventor: EIFER, Bernd, 8200 Schaffhausen (CH); THOMAS, Cornelius, 8200 Schaffhausen (CH); KAMINSKI, Stephen, 8200 Schaffhausen (CH)
(74) Representative: Grünecker Patent- und Rechtsanwälte PartG mbB

(57) **Abstract**

The invention relates to a contact module (14, 14a, 14b, 14c) for monitoring a substack (18, 18a, 18b, 18c) of bipolar plates (4, 4a, 4b, 4c) of a fuel cell stack (10) that are stacked on top of one another in a stacking direction (6), with a plate contacting assembly (20) which is configured to electrically contact the bipolar plates of the substack, and with a measuring device (24) which is electrically connected to the plate contacting assembly and is configured to measure a differential voltage (28) between each two neighboring bipolar plates of the substack and generate a voltage signal (70) that is representative of this differential voltage. The object of the invention also includes a set of such contact modules as well as a fuel cell system with such a set of contact modules. The cell voltages of a fuel cell stack can be measured precisely with the devices according to the invention. At the same time, a complex structure of the devices according to the invention is prevented.

## Description

The present invention relates to a contact module for monitoring fuel cells, a set with such contact modules, and a fuel cell system with such a set.

Fuel cells are energy converters that convert chemical energy into electrical energy. Fuel cells are typically organized in stacks, in so-called fuel cell stacks. In simplified terms, the fuel cells consist of two bipolar plates arranged next to each other, between which an electrolyte and a membrane are positioned. Due to the chemical reaction, an electrical voltage drops across the membranes. This so-called cell voltage, which is measurable at the bipolar plates, represents an important operating variable of the fuel cell. For monitoring the fuel cell, these cell voltages should be measured with high accuracy. At the same time, the design complexity of the contact module should be kept as low as possible.

The present invention is therefore based on the object of providing structurally simple devices with which the cell voltages of a fuel cell stack can be precisely measured.

This object is satisfied by a contact module for monitoring a substack of bipolar plates of a fuel cell stack that are stacked one above the other in a stacking direction,
with a plate contacting assembly that is configured to electrically contact the bipolar plates of the substack, and
with a measuring device which is electrically connected to the plate contacting assembly and which is configured to measure a differential voltage between each two adjacent bipolar plates of the substack and to generate a voltage signal that is representative of this differential voltage.

Such a contact module determines the cell voltages of the fuel cells in the form of the differential voltage between the bipolar plates of the respectively measured fuel cell. Since the differential voltages themselves are at a comparatively low voltage level of approximately 1 V at no load and of approximately 0.5 V at power adjustment (typical full load), complex insulation or separation measures are not required. A complex construction of the contact module is therefore prevented.

The above invention can be further improved by the following configurations which are each advantageous by themselves and which may be combined with each other at random.

In the present document, each two adjacent bipolar plates can each be designated as a pair of adjacent bipolar plates.

The differential voltage of two adjacent bipolar plates or the voltage signal that is representative thereof corresponds to the cell voltage of that fuel cell between whose bipolar plates the differential voltage is measured. In other words, the differential voltage provides information about the cell voltage.

The plate contacting assembly can be configured to electrically contact at least one pair of adjacent bipolar plates of the substack, but preferably all pairs of adjacent bipolar plates of the substack. The bipolar plates can each have a contacting with which the plate contacting assembly is connected in an electrically conductively manner. The plate contacting assembly can thereby rest on the contactings of the bipolar plates, in particular at regions of the plate contacting assembly configured for contacting the bipolar plates.

To enable complete monitoring, the measuring device is preferably configured to measure the differential voltages of all pairs of each adjacent bipolar plates of the substack. In a more economical configuration, however, the measuring device can also measure only a single pair or selected pairs of adjacent bipolar plates of the substack.

The measuring device can comprise at least one voltage measuring device. In a cost-effective embodiment, the at least one voltage measuring device is preferably configured to jointly measure the differential voltage of at least some pairs of adjacent bipolar plates of the substack. Of course, it is also conceivable that a separate voltage measuring device is provided for at least one pair of adjacent bipolar plates. The measuring device can have at least one circuit board.

To make the contact between the plate contacting assembly and the bipolar plates vibration-resistant, the plate contacting assembly can comprise at least one guide rubber. Preferably, an anisotropic guide rubber is used. The at least one guide rubber can have alternately successive electrically conductive regions and electrically insulating regions, whose dimensions along a longitudinal axis of the guide rubber are preferably identical. The electrically conductive and the electrically insulating regions can be arranged between two insulating edge layers. In a cost-effective configuration, the regions can be manufactured integrally with the edge layers and/or from the same plastic material as the edge layers.

In one configuration, the plate contacting assembly can comprise at least two guide rubbers whose longitudinal axes preferably extend parallel to each other.

If the plate contacting assembly comprises at least one guide rubber, the regions of the plate contacting assembly configured for contacting the bipolar plates are preferably arranged on this at least one guide rubber.

To be able to monitor the bipolar plates in terms of a further essential parameter, the measuring device can further be configured to measure an electrical current flowing between each two adjacent bipolar plates of the substack and to generate a current signal that is representative of this electrical current. The electrical current is preferably measured between the contactings of the measured bipolar plates or between the regions of the plate contacting assembly configured for contacting the bipolar plates. To enable complete monitoring, the measuring device is preferably configured to measure the currents, in particular through the plate contacting assembly, of all pairs of respectively adjacent bipolar plates of the substack. In a more cost-effective configuration, the measuring device can of course also measure only one pair or some selected pairs of adjacent bipolar plates of the substack and/or of adjacent regions of the plate contacting assembly configured for contacting the bipolar plates.

A known resistor connected in series, which can also be designed as an internal resistance of the measuring device, can be used to limit the current at small expected resistances of the plate contacting assembly.

The measuring device can comprise at least one current measuring device that jointly measures the currents of at least some pairs of adjacent bipolar plates and/or adjacent regions of the plate contacting assembly configured for contacting the bipolar plates, similar to the voltage measuring device. Similar to the voltage measuring device, it is of course possible that a separate current measuring device is provided for at least one pair of adjacent bipolar plates.

To be able to test the functional state of the plate contacting assembly and/or bipolar plates during operation, the measuring device can further be configured to
- electrically short-circuit each two adjacent bipolar plates of the substack via regions of the plate contacting assembly that electrically contact these bipolar plates,
- generate the voltage signal before or after short-circuiting the bipolar plates, and
- generate a resistance signal from the voltage signal generated before or after short-circuiting the bipolar plates and the current signal generated during short-circuiting that is representative of the electrical resistance of the electrically short-circuited bipolar plates and/or the regions of the plate contacting assembly contacting these bipolar plates.

The resistance of two electrically short-circuited bipolar plates or the regions of the plate contacting assembly contacting them can be calculated, for example, from the voltage signal and the current signal using Ohm's law. The voltage signal is then preferably representative of the differential voltage of the regions of the plate contacting assembly or the bipolar plates before or after short-circuiting, whereas the current signal represents the electrical current between the electrically short-circuited bipolar plates or regions of the plate contacting assembly, i.e., during short-circuiting. Based on the resistance of the short-circuited bipolar plates or the regions of the plate contacting assembly contacting them, conclusions can be drawn as to the quality and functional state, in particular the wear or remaining service life of the regions of the plate contacting assembly or bipolar plates, respectively.

Generating the voltage signal before or after short-circuiting can occur in an automated manner. To achieve complete monitoring, the measuring device is preferably configured to short-circuit the bipolar plates of all pairs of respectively adjacent bipolar plates of the substack or the regions of the plate contacting assembly contacting these bipolar plates and to determine their resistance. In a more cost-effective configuration, however, the measuring device can also be configured to determine the resistance of the regions of the plate contacting assembly or the bipolar plates contacted by them of only one pair or some pairs of adjacent bipolar plates of the substack.

To be able to evaluate the variables collected by the measuring device directly in the contact module, the contact module can comprise an evaluation device that is configured to
- compare the voltage signal with a permissible voltage value range, and/or
- compare the current signal with a permissible current value range, and/or
- compare the resistance signal with a permissible resistance value range.

Conclusions as to the operating state of the fuel cells can be drawn by way of the comparison of at least one of the signals with its respective permissible value range.

To reduce the data traffic between the evaluation device and other components, the permissible voltage value range and/or the permissible current value range and/or the permissible resistance value range is preferably stored in the evaluation device. For this purpose, the evaluation device can comprise, for example, at least one data storage, for example, at least one hard disk, and/or at least one circuit board.

The permissible voltage value range can extend between approximately 0 V and approximately 1 V, the permissible current value range between approximately 0 A and approximately 1 A, and the resistance value range between approximately 1 Ω and approximately 4000 Ω. The term "approximately" can designate a deviation of 10%.

The evaluation device can be configured to select the voltage signal and/or current signal and/or resistance signal to further reduce data traffic. For example, the amount of data that must be transmitted to a central control unit can then be reduced. For selecting process, the evaluation device can be configured to forward only those signals that were identified by the evaluation device as deviating from their respective permissible value range. Preferably, all signals that do not deviate from their respective value range are deleted by the evaluation device.

The evaluation device can further be configured to generate at least one alarm signal when
- the voltage signal is outside the permissible voltage value range, and/or
- the current signal is outside the permissible current value range, and/or
- the resistance signal is outside the permissible resistance value range.

The current operating state of the fuel cells can be transmitted in the form of the alarm signal to other components, for example, to a central control unit, in a simple manner.

In one configuration, the alarm signal can represent only the information about whether a signal is outside its permissible value range. In other configurations, the alarm signal can alternatively or cumulatively additionally comprise the signal itself that is outside its permissible value range. When multiple signals deviate from their respective value range, the evaluation device can of course generate multiple alarm signals, wherein preferably a separate alarm signal is generated for each signal deviating from its permissible value range.

To be able to indicate impermissible operating states, the contact module can comprise an optical and/or acoustic alarm device that is configured to be activated as a function of the alarm signal. For this purpose, the alarm device can have, for example, at least one light and/or a speaker.

To simplify the further processing of the generated signals, the contact module can comprise at least one analog-to-digital converter that is configured to digitize at least one of the signals from the following group of signals:
- the voltage signal;
- the current signal;
- the resistance signal;
- the alarm signal.

When the voltage signal, the current signal, the resistance signal, or the alarm signal is generally mentioned in the present document, the analog or digital voltage signal, current signal, resistance signal, or alarm signal can be meant.

The voltage signal does not necessarily have to be a voltage, but can also be, for example, a current value or a resistance value. The voltage signal - in its form digitized by the analog-to-digital converter - can also consist of only one piece of information. The above explanations can of course apply analogously to the current signal, the resistance signal, and the alarm signal.

The amount of data to be digitized in the analog-to-digital converter can be reduced if the at least one analog-to-digital converter is connected downstream of the evaluation device. This means that the digitization of the signals by the analog-to-digital converter only occurs after the signals have been compared with their respective permissible value range in the evaluation device.

In a configuration that is particularly economical with respect to the amount of data to be digitized, only the signals deviating from their permissible value ranges can be digitized.

For the contact module to be able to communicate with other components, for example, with the central control unit, the contact module can comprise a transmission device that is configured to send wirelessly or by wire the signals digitized by the analog-to-digital converter.

Alternatively or cumulatively to the transmission device, the contact module can comprise at least one electrical connector that is configured to connect the contact module to an electronic infrastructure or to other components, for example, the central control unit.

The object is further satisfied by a set of contact modules,
with a first contact module according to one of the configurations described above and
with a second contact module according to one of the configurations described above and
wherein the first contact module and the second contact module are each configured to be arranged next to each other in a spatially mutually complementary manner.

Such a set enables a particularly compact arrangement of the contact modules. Furthermore, an overlap of the contact modules, in particular an overlap of the plate contacting assemblies of the contact modules, can be realized in a simple manner. The contact modules are preferably arranged next to each other or side by side in the stacking direction.

The contact modules can be configured such that their plate contacting assemblies overlap at least in sections or only overlap when the contact modules are arranged next to each other in a spatially mutually complementary manner. The plate contacting assemblies can there overlap in at least one direction perpendicular to the stacking direction and/or in the stacking direction. The at least one direction extending perpendicular to the stacking direction preferably extends along planes that are spanned by the bipolar plates to which the contact modules are to be attached.

In one configuration, the contact modules can be configured to overlap at least in sections, but preferably completely, in the stacking direction.

If both plate contacting assemblies each have at least one guide rubber, then the at least one guide rubber of the plate contacting assembly of the first contact module and the guide rubber of the plate contacting assembly of the second contact module preferably overlap with at least one, more preferably with exactly one electrically conductive region. If the set of contact modules arranged next to each other is placed on a stack of bipolar plates, then at least one of the bipolar plates of the stack can be contacted both by the plate contacting assembly of the first contact module as well as by the plate contacting assembly of the second contact module.

In a particularly cost-effective configuration, the first and second contact module can be configured to be identical.

According to a further configuration, a housing of the first contact module and a housing of the second contact module can be configured to be complementary at least in sections and be configured to overlap in the at least one direction extending perpendicular to the stacking direction. Such a configuration is particularly compact. The housings can alternatively or cumulatively be configured to overlap in the stacking direction. The housings can spatially complement each other at least in sections.

The housing of the first contact module and the housing of the second contact module preferably overlap in a direction that extends parallel to longitudinal directions of the side surfaces of the bipolar plates to be contacted by the contact assemblies.

In one configuration, the housings can overlap such that an imaginary first cuboid-shaped volume in which the housing of the first contact module is just completely received and an imaginary second cuboid-shaped volume in which the housing of the second contact module is just completely received intersect or overlap when the contact modules are arranged next to each other in a spatially mutually complementary manner.

To restrict a relative movability of the housings, the housings of the contact modules can together form a stop. The stop can restrict, for example, the relative movability of the housings in the stacking direction. Each housing can have at least one respective stop surface for forming the stop which is preferably arranged in the section configured to be complementary to the respective other housing or in the sections of the housing configured complementarily to the respective other housing.

The contact modules are preferably configured such that the plate contacting assemblies of the contact modules arranged to be spatially mutually complementary next to each other only overlap correctly when the housings, in particular the stop surfaces of the housing of the first and second contact module, abut against each other. The plate contacting assemblies can in particular overlap correctly when they overlap just enough that at least one of the bipolar plates of the stack to which the set is attached is electrically contacted both by the plate contacting assembly of the first as well as by the plate contacting assembly of the second contact module.

The complementarity between the housings is realized in a particularly simple manner in terms of design when the housing of the first contact module comprises at least one recess in which at least one projection of the housing of the second contact module can be received. For example, a depression, an indentation, a niche, or a corner can be considered to be a recess. For example, a bulge, a corner, or a rib can serve as a projection.

At least one housing can have a projection and a recess that is complementary to this projection. In this way, the housings of identically configured contact modules can spatially complement each other. This configuration is particularly modular and cost-effective since only one type of contact module needs to be provided.

The housings of the first and second contact module can each have a base section and a plate contacting section that is at an angle thereto. The plate contacting sections can serve to receive the respective plate contacting assembly at least in sections, whereas, for example, the respective measuring device can be received at least in sections in the base section. The projection or recess is preferably arranged in the plate contacting section or formed thereby.

To be able to securely connect the housings of the first and the second contact module to each other, the housings can each comprise a positive-fit assembly. The positive-fit assembly is preferably arranged on the projection and/or recess of the respective housing. The housings of the first and the second contact module can be pluggable together, slidable together, insertable into each other, joinable together, and/or latchable. Such housings can be connected to each other in a simple and reliable manner.

The features that were explained with reference to the first and/or second contact module can of course also apply to contact modules that are not part of the set of contact modules.

The object is further satisfied by a fuel cell system with a stack of bipolar plates arranged one above the other in the stacking direction, with a set according to one of the configurations described above, wherein the plate contacting assembly of the first contact module contacts the bipolar plates of a first substack of the bipolar plates in an electrically conductive manner, and wherein the plate contacting assembly of the second contact module contacts the bipolar plates of a second substack of the bipolar plates in an electrically conductive manner, wherein the first substack and the second substack comprise at least one common bipolar plate that is contacted in an electrically conductive manner both by the plate contacting assembly of the first contact module as well as by the plate contacting assembly of the second contact module. Due to this overlap, it is ensured that each fuel cell of the fuel cell stack is monitored by the first contact module and/or the second contact module. In this way, no fuel cell of the fuel cell stack is omitted.

For no fuel cell to be monitored by both contact modules, which would be inefficient, the first and the second substack comprise exactly one common bipolar plate that is contacted both by the plate contacting assembly of the first contact module as well as by the plate contacting of the second contact module. In a further configuration, of course, more than one, for example, two or five common bipolar plates, can also be provided. The monitoring can then occur in a redundant manner.

Hereinafter, the invention shall be explained in more detail by way of example using embodiments with reference to the appended Figures. Individual features present in the following embodiment can be omitted if, according to the above embodiments, the technical effect associated with this feature should not be relevant. Conversely, a feature described above but not present in an embodiment hereafter can be added to the embodiment if, for a specific application, the technical effect associated with this feature should be relevant.

The same reference numerals are used for elements that correspond to one another in terms of function and/or structure,
where:
- Fig. 1: shows a schematic perspective illustration of a fuel cell system according to a possible embodiment;
- Fig. 2: shows a schematic bottom view of the fuel cell system from Figure 1;
- Fig. 3: shows a schematic top view of the fuel cell system from Figure 1;

- Fig. 4: shows a schematic side view of the fuel cell system from Figure 1;
- Fig. 5: shows a schematic illustration of a fuel cell system according to a possible further embodiment; and
- Fig. 6: shows a schematic illustration of the signal processing of a contact module according to a possible embodiment.

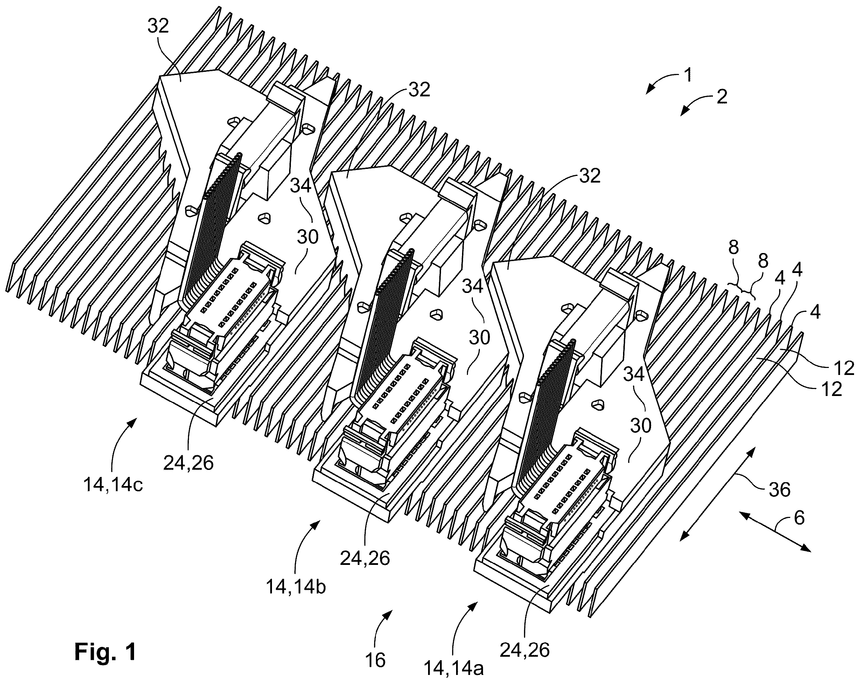

Figures 1 to 4 show a possible configuration of a fuel cell system 1. Fuel cell system 1 comprises a stack 2 of bipolar plates 4 that are arranged one above the other or, synonymously, next to each other in a stacking direction 6. Each two adjacent bipolar plates 4 there are each a component of a fuel cell 8. The totality of all fuel cells 8 forms a fuel cell stack 10. Further components are typically arranged in spacings 12 that are arranged in stacking direction 6 between two adjacent bipolar plates 4, which components can be parts of fuel cell 8 comprising these adjacent bipolar plates 4. These components which can comprise, for example, a membrane and an electrolyte, are not shown for the sake of clarity.

Fuel cell system 1 in the present embodiment can comprise multiple contact modules 14 that are arranged in stacking direction 6 next to each other. Contact modules 14 are there configured purely by way of example to be identical. However, at least two contact modules 14 can of course also be different from each other. In the present embodiment, a first contact module 14a, a second contact module 14b, and a third contact module 14c can be provided, of which first contact module 14a and second contact module 14b form a set 16 of contact modules 14. Of course, fuel cell system 1 can also comprise only a single contact module 14. Likewise, it is possible that more than three contact modules 14, for example, five or ten contact modules 14, are provided. Two adjacent contact modules 14 do not necessarily have to form set 16 of contact modules 14.

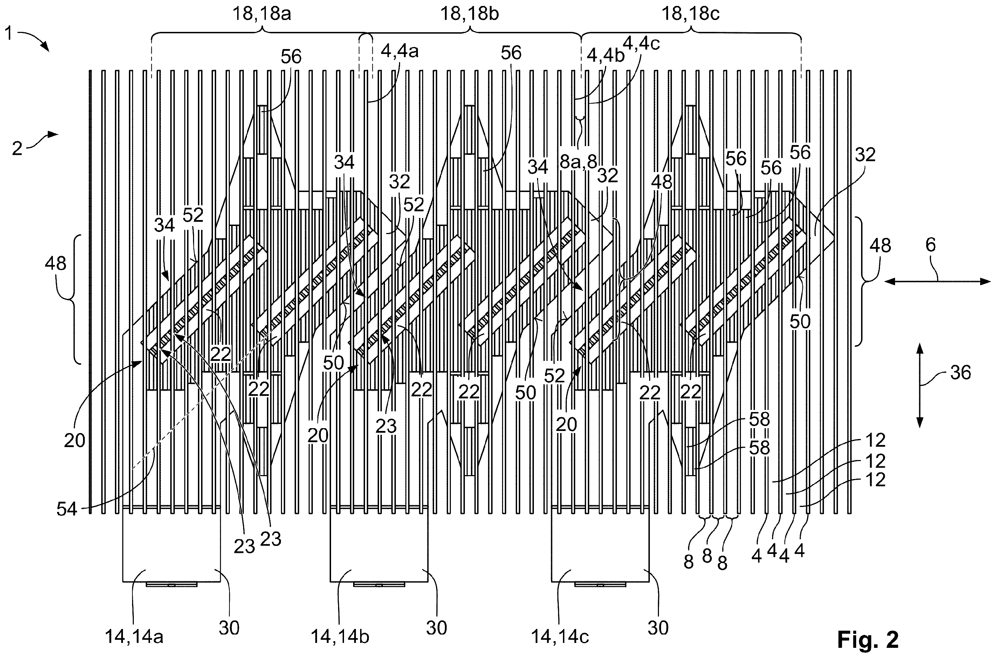

As is well evident from Figure 2, contact modules 14 are configured to each monitor a substack 18 of stack 2. In configurations in which only a single contact module 14 is provided, this single contact module 14 can be provided for monitoring all bipolar plates 4. In this case, substack 18 can correspond to stack 2.

As is further evident from Figure 2, each contact module 14 comprises a plate contacting assembly 20 for contacting bipolar plates 4 of substack 18 that is contacted by respective contact module 14. In the present embodiment, plate contacting assemblies 20 comprise purely by way of example two guide rubbers 22 each which can extend parallel to each other and at an angle to stacking direction 6. Of course, in other configurations it is also conceivable that at least one of contact modules 14 comprises only a single guide rubber 22 and/or that guide rubber 22 or guide rubbers 22 extend or extends along stacking direction 6. Plate contacting assemblies 20 incidentally do not necessarily have to comprise at least one guide rubber 22. Instead, at least one of contact modules 14 can also comprise, for example, spring contacts that contact bipolar plates 4.

Plate contacting assembly 20 can contact bipolar plates 4 in an electrically conductive manner, in particular at regions 23 of plate contacting assembly 20 that are configured for contacting bipolar plates 4, wherein regions 23 in the present embodiment are each arranged by way of example at one of guide rubbers 22.

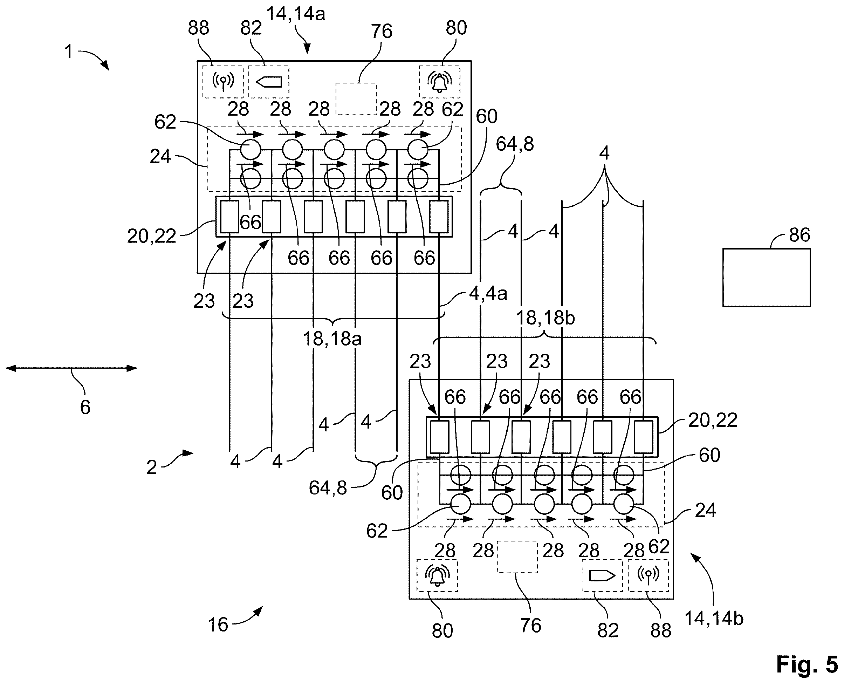

Contact modules 14 each further comprise a measuring device 24 that is configured to measure a differential voltage 28 (see Figure 5) between each two adjacent bipolar plates 4 of substack 18 monitored by respective contact module 14. For this purpose, measuring device 24 of each contact module 14 is electrically connected to plate contacting assembly 20 of this contact module 14. In the present embodiment, measuring device 24 of each contact module 14 can comprise, for example, a circuit board 26 that is electrically connected to plate contacting assembly 20 of this contact module 14. The electrical connection between measuring device 24 and plate contacting assembly 20 of at least one of contact modules 14 can be configured in various ways. For example, measuring device 24 can be connected to plate contacting assembly 20 by way of electrical lines. Likewise, measuring device 24, in particular circuit board 26 of measuring device 24, can abut directly against guide rubbers 22.

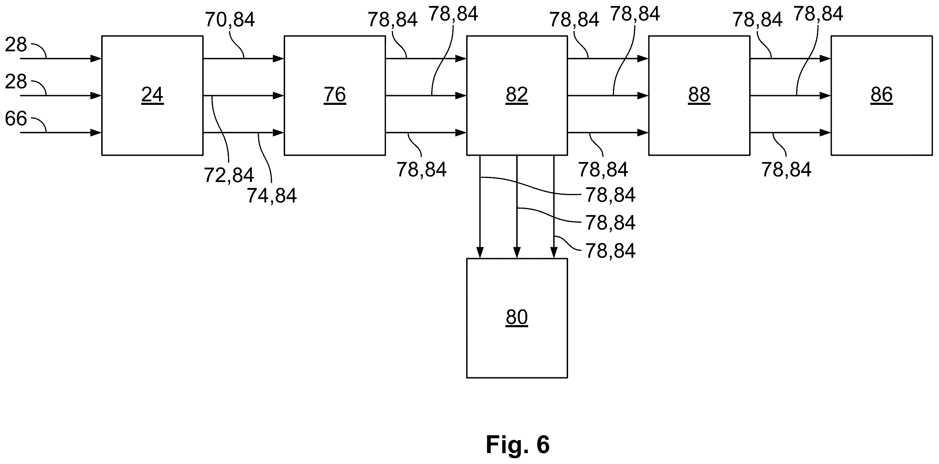

Measuring device 24 is capable of generating a voltage signal 30 (see Figure 6) that is representative of differential voltage 28. Differential voltage 28 there corresponds to the cell voltage of the fuel cell that comprises adjacent bipolar plates 4 between which differential voltage 28 is measured. Since differential voltage 28 is typically quite low, complex insulation or separation measures in the signal transmission paths are not required. This increases the measurement accuracy of differential voltage 28 or differential voltages 28 and thus of the cell voltage or cell voltages.

As is well evident from Figure 2, plate contacting assembly 20 of first contact module 14, 14a can contact bipolar plates 4 of a first substack 18a of bipolar plates 4, whereas plate contacting assembly 20 of second contact module 14b can contact bipolar plates 4 of a second substack 18b of bipolar plates 4. First substack 18, 18a and second substack 18, 18b can there overlap so that first substack 18, 18a and second substack 18, 18b comprise at least one, but preferably exactly one common bipolar plate 4a. At least one common bipolar plate 4, 4a is therefore part of first substack 18, 18a as well as part of second substack 18, 18b. Common bipolar plate 4, 4a is therefore contacted by plate contacting assembly 20 of first contact module 14, 14a as well as by plate contacting assembly 20 of second contact module 14, 14b. In this way, it is possible to gather the cell voltage of each fuel cell 8 by way of the measurement of differential voltages 28.

Of course, substacks 18 of contact modules 14 that are adjacent in stacking direction 6 do not necessarily have to overlap. As is evident from Figure 2, plate contacting assembly 20 of third contact module 14, 14c contacts a third substack 18c. Third substack 18c and second substack 18b in the embodiment illustrated have no common bipolar plate 4, 4a, but are simply arranged next to each other in stacking direction 6. This has the consequence that the cell voltage of a non-detected fuel cell 8a, which is formed by an outer bipolar plate 4, 4b of second substack 18b and an outer bipolar plate 4, 4c of third substack 18c, can be measured neither by second nor by third contact module 14, 14b, 14c through differential voltage 28. This again illustrates that an overlap of substacks 18, as is present between first and second substack 18, 18a, 18b, is advantageous.

First and second contact module 14, 14a, 14b can each be configured to spatially complement each other when they are arranged next to each other in stacking direction 6. In the present embodiment, each of contact modules 14, 14a, 14b, 14c comprises a housing 30, wherein housing 30 of first contact module 14, 14a spatially complements housing 30 of second contact module 14, 14b and housing 30 of second contact module 14, 14b can spatially complement housing 30 of third contact module 14, 14c. For this purpose, housings 30 of first and second contact module 14, 14a, 14b and housings 30 of second and third contact module 14, 14b, 14c can be configured at least in sections to be complementary to each other.

In the present embodiment, in which housings 30 of contact modules 14 are configured to be identical, each housing 30 can comprise a projection 32 and a recess 34 that is complementary thereto. Projection 32 of housing 30 of a contact module 14 can then fit into recess 34 of housing 30 of an adjacent contact module 14 so that housings 30 of these adjacent contact modules 14 spatially complement each other. Projection 32 can be configured, for example, as a bulge or corner or have at least one rib. Recess 34 can be configured, for example, as a depression, indentation, niche, or corner or have at least one groove.

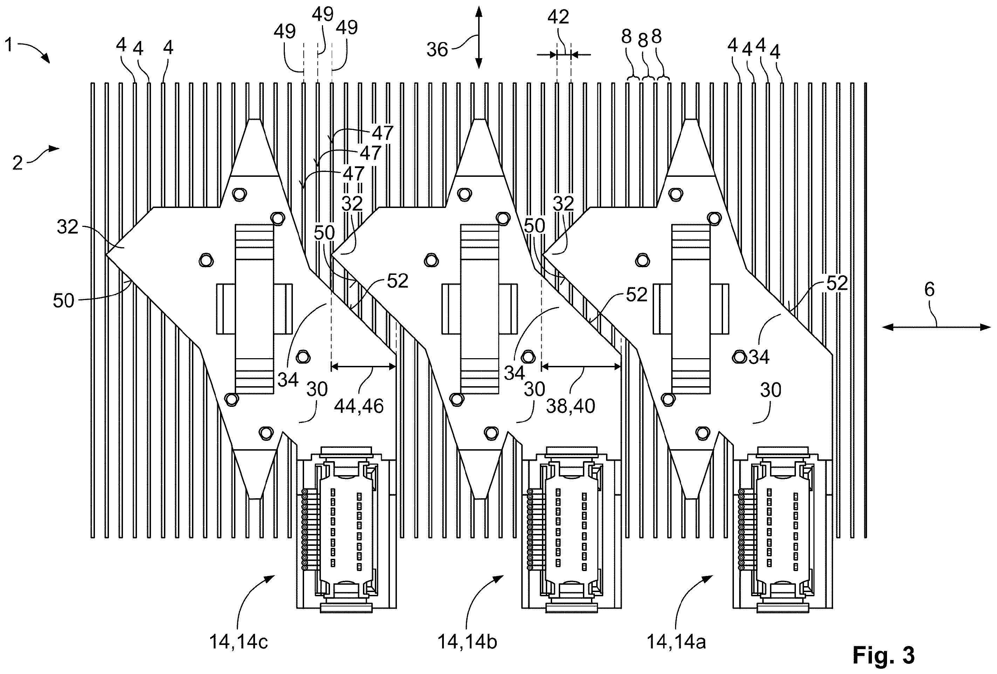

As is further evident from Figures 1 to 3, housings 30 of first and second contact module 14, 14a, 14b or of second and third contact module 14, 14b, 14c can overlap in at least one direction 36 extending perpendicular to stacking direction 6. Housings 30 of first and second contact module 14, 14a, 14b can overlap in a first overlap region 38, as is clearly evident from Figure 3. A width 40 in stacking direction 6 of first overlap region 38 in the present embodiment can correspond approximately to six times a width 42 of fuel cells 8. As is further evident from Figure 2, housing 30 of second and third contact module 14, 14b, 14c can overlap, for example, in a second overlap region 44, wherein a width 46 of second overlap region 44 is there purely by way of example smaller than width 40 of first overlap region 38.

Direction 36 in which housings 30 of first and second contact module 14, 14a, 14b can overlap in first overlap region 38 and housings 30 of second and third contact module 14, 14b, 14c in second overlap region 44 preferably extends parallel to longitudinal directions 49 of side surfaces 47 of bipolar plates 4 to be contacted by contact assemblies 20.

In the embodiment shown in Figures 1 to 3, projections 32 and recesses 34 of the housing of each contact module 14 can be arranged in a contacting section 48 of respective housing 30. Contacting section 48 is there that respective part of housing 30 in which plate contacting assembly 20 of respective contact module 14 is received. Side surfaces 50 of projections 32 and side surfaces 52 of recesses 34 of the housings can then each follow the position of guide rubbers 22. For example, side surface 50 of projection 32 and side surface 52 of recess 34 of housing 30 of first contact module 14, 14a can extend, for example, parallel to a longitudinal axis 54 of guide rubber 22 of first contact module 14, 14a.

In one configuration, side surface 50 of projection 32 of housing 30 of a contact module 14 does not necessarily have to be spaced from side surface 52 of recess 34 of housing 30 of an adjacent contact module 14 in stacking direction 6. In particular, projection 32 of housing 30 of a contact module 14 and recess 34 of housing 30 of an adjacent contact module 14 can be configured, for example, to form a stop - preferably in the stacking direction. Each side surface 50, 52 can then correspond to a stop surface.

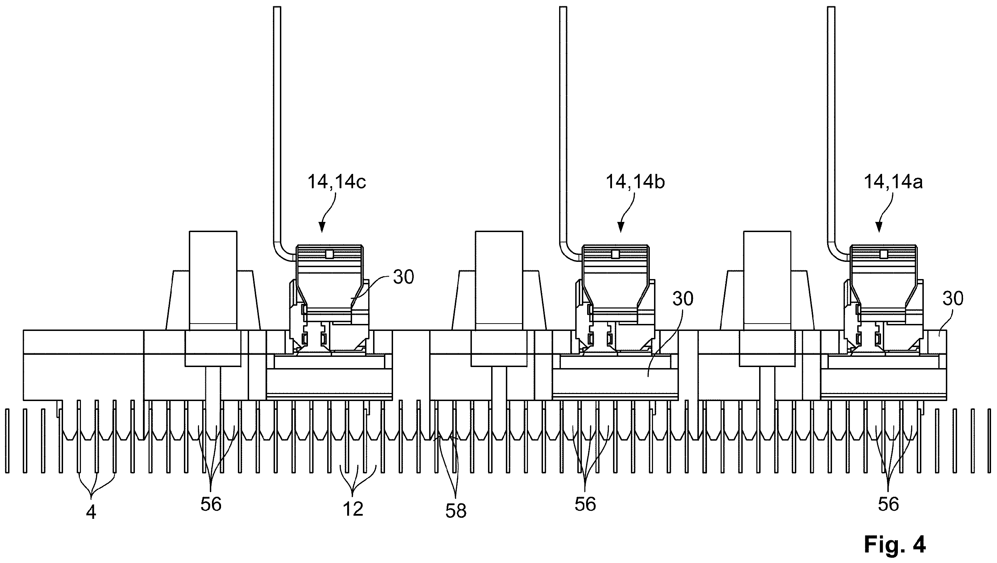

As is clearly evident from Figures 2 and 4, contact modules 14 or their housings 30, respectively, can each comprise positioning elements 56. They are configured to enter into spacings 12 arranged between respectively adjacent bipolar plates 4 and to align and/or attach respective contact module 14 or housing 30 relative to bipolar plates 4. To facilitate the entry of positioning elements 56 into spacings 12, positioning elements 56 can comprise insertion chamfers 58 at their ends facing away from plate contacting assemblies 20.

Figure 5 shows a schematic greatly simplified illustration of a fuel cell system 1 according to a further possible embodiment. Fuel cell system 1 comprises stack 2 of bipolar plates 4 arranged one above the other in stacking direction 6. Furthermore, a set 16 of contact modules 14 comprising a first and a second contact module 14, 14a, 14b can be provided. Plate contacting assembly 20 of first contact module 14, 14a contacts bipolar plates 4 of first substack 18, 18a, whereas plate contacting assembly 20 of second contact module 14, 14b contacts bipolar plates 4 of second substack 18, 18b in an electrically conductively manner. In this embodiment as well, first and second substack 18, 18a, 18b can overlap and comprise a common bipolar plate 4, 4a. This common bipolar plate 4, 4a can there be contacted in an electrically conductively manner by plate contacting assembly 20 of first contact module 14, 14a as well as by plate contacting assembly 20 of second contact module 14, 14b. In other configurations, first and second substack 18, 18a, 18b can of course also overlap with more than one bipolar plate 4 and therefore comprise more than one, for example, two or three common bipolar plates 4, 4a.

In the embodiment according to Figure 5, plate contacting assemblies 20 of both contact modules 14, 14a, 14b can each comprise a guide rubber 22. Guide rubber 22 of plate contacting assembly 20 of first contact module 14, 14a can thereby electrically contact bipolar plates 4 of first substack 18, 18a, whereas guide rubber 22 of plate contacting assembly 20 of second contact module 14, 14b can electrically contact bipolar plates 4 of second substack 18, 18b. With the exception of common bipolar plate 4, 4a, which is contacted by guide rubber 22 of first and second contact module 14, 14a, 14b, each bipolar plate 4 in the present embodiment can be contacted by exactly one guide rubber 22.

In the present embodiment, guide rubbers 22 are purely by way of example connected to respective measuring device 24 by way of electrical lines 60. Measuring device 24 of both contact modules 14, 14a, 14b is configured to measure differential voltage 28 between two respective adjacent bipolar plates 4. For this purpose, measuring devices 24 can comprise, for example, at least one voltage measuring device 62. In the present embodiment, measuring device 24 of first contact module 14, 14a is purely by way of example configured to measure differential voltages 28 of all adjacent bipolar plates 4, i.e., all pairs 64 of bipolar plates 4 of first substack 18, 18a. Likewise, measuring device 24 of second contact module 14, 14b purely by way of example can measure differential voltages 28 of all adjacent bipolar plates 4, i.e., all pairs 64 of bipolar plates 4 of second substack 18, 18b. In other configurations, it is of course also conceivable that a measuring device 24 measures only differential voltage 28 of one pair 64 or differential voltages 28 of some selected pairs 64 of bipolar plates 4.

In the embodiment according to Figure 5, measuring devices 24 can further be configured to measure an electrical current 66 flowing between adjacent bipolar plates 4 of respective substack 18. For this purpose, measuring devices 24 can each comprise, for example, at least one current measuring device 68. Measuring device 24 of first contact module 14, 14a can be configured by way of example to measure currents 66 between all pairs 64 of adjacent bipolar plates 4 of first substack 18, 18a. Likewise, measuring device 24 of second contact module 18, 18b can purely by way of example measure currents 66 between all pairs 64 of respectively adjacent bipolar plates 4 of second substack 18, 18b. Of course, a measuring device 24 can also measure only currents 66 between a single pair 64 or some selected pairs 64 of adjacent bipolar plates 4.

As is evident from Figure 5, the overlap of first and second contact module 14, 14a, 14b at at least one common bipolar plate 4, 4a enables that differential voltage 28 and/or electrical current 66 between all pairs 64 of adjacent bipolar plates 4 and thereby of all fuel cells 8 can be determined.

In one configuration, measuring device 24 of at least one of contact modules 14, 14a, 14b can be configured to cause an electrical short circuit during operation between two bipolar plates 4, but preferably between at least two or even all pairs of adjacent bipolar plates 4 of first or second substack 18, 18a, 18b. The electrical short circuit is there brought about via regions 23 or between regions 23 of plate contacting assembly 20 that electrically contact bipolar plates 4 to be short-circuited or that have been short-circuited. Electrical current 66 can then be measured between each two electrically short-circuited regions 23 of plate contacting assembly 20 and bipolar plates 4 contacted by them, and current signal 72 representative thereof can be generated (explained later with reference to Figure 6). Measuring device 24 can then generate a resistance signal 74 from voltage signal 70 or current signal 72, (see also Figure 6) that is representative of an electrical resistance of electrically short-circuited regions 23 of plate contacting assembly 20 and bipolar plates 4 contacted by them. In this way, conclusions about the state, in particular about the wear of regions 23 of plate contacting assembly 20 and bipolar plates 4, can be drawn using the electrical resistance thus determined.

As is further evident from Figure 5 or Figure 6, contact modules 14, 14a, 14b can each comprise an evaluation device 76 with which voltage signal 70 and/or resistance signal and/or current signal 72 can be compared with permissible value ranges for monitoring purposes. The evaluation devices can then be configured in particular to compare voltage signals 70 with a permissible voltage value range and/or current signals 72 with a permissible current value range and/or the resistance signals 74 with a permissible resistance value range. Evaluation device 76 can generate at least one alarm signal 78 when at least one of the signals is outside its respective permissible value range. To indicate this event, contact modules 14, 14a, 14b can be combined with or comprise an alarm device 80 that is activated as a function of at least one alarm signal 78. Alarm device 80 can have, for example, at least one light and/or at least one speaker.

As is further evident from Figure 5, contact modules 14, 14a, 14b can each comprise an analog-to-digital converter 82 that is configured to digitize at least one of signals 84 comprising voltage signal 70, current signal 72, resistance signal 74, and alarm signal 78. Analog-to-digital converter 82 - if such is provided - is preferably connected downstream of evaluation device 76 to reduce the amount of data to be digitized. In a preferred configuration, analog-to-digital converter 82 digitizes only those signals 84 that were identified by the evaluation device 76 as deviating from their respective permissible value range.

To communicate the measured quantities in the form of generated signals 84 to other components, for example, to a central control unit 86, contact modules 14, 14a, 14b can each comprise a transmission device 88 that is configured to wirelessly send signals 84 digitized by analog-to-digital converter 82. Of course, it is basically also conceivable that signals 84 are transmitted to central control unit 86 with the aid of lines.

Finally, the mode of operation of the signal processing of first or second contact module 14, 14a, 14b shown in Figure 5 is described purely by way of example and greatly simplified with reference to Figure 6. It is to be mentioned that the signal processing presently described relates only to some of many possible configurations.

First, measuring device 24 generates one or more voltage signals 70 that is or are representative of differential voltages 28 between one or more pairs 64 of respective adjacent bipolar cells 4. In some configurations, measuring device 24 additionally generates at least one current signal 72 that is representative of electrical current 66 between one or more pairs 64 of respective adjacent bipolar plates 4. In addition, measuring device 24 can generate at least one resistance signal 74.

In some configurations, the voltage signals and - to the extent generated - the current signals and/or resistance signals are transmitted directly to analog-to-digital converter 82 and digitized there. In the configuration shown in Figure 6, however, these signals 84 can first be forwarded to evaluation device 76 where they are compared with their respective permissible value ranges. If at least one of signals 84 deviates from respective permissible value range, evaluation device 76 can generate at least one alarm signal 78. A separate alarm signal 78 can be generated for each signal 84 deviating from its permissible value range. Thereafter, signals 84 are preferably transmitted to analog-to-digital converter 82 and digitized there. Before or after the digitization of alarm signals 78, they can be supplied to alarm device 80 which is activated as a function of alarm signals 78.

Digitized signals 84 can then be transmitted, for example, to transmission device 88, with the aid of which digitized signals 84 can be sent wirelessly to other components, for example, to central control unit 86. The latter can then optionally carry out further processing steps.

### List of reference numerals

- 1: fuel cell system
- 2: stack
- 4: bipolar plate
- 4a: common bipolar plate
- 4b: outer bipolar plate of the second substack
- 4c: outer bipolar plate of the third substack
- 6: stacking direction
- 8: fuel cell
- 8a: non-detected fuel cell
- 10: fuel cell stack
- 12: spacing
- 14: contact module
- 14a: first contact module
- 14b: second contact module
- 14c: third contact module
- 16: set
- 18: substack
- 18a: first substack
- 18b: second substack
- 18c: third substack
- 20: plate contacting assembly
- 22: guide rubber
- 22a: electrically conductive region
- 22b: electrically insulating region
- 23: region of the plate contacting assembly configured for contacting the bipolar plates
- 24: measuring device
- 26: circuit board
- 28: differential voltage
- 30: housing
- 32: projection
- 34: recess
- 36: direction extending perpendicular to the stacking direction
- 38: first overlapping region
- 40: width of the first overlap region
- 42: width of a fuel cell
- 44: second overlap region
- 46: width of the second overlap region
- 47: side surface of a bipolar plate to be contacted
- 48: contacting section
- 49: longitudinal direction of the side surface to be contacted
- 50: side surface of a projection
- 52: side surface of a recess
- 54: longitudinal axis of a guide rubber
- 56: positioning element
- 58: insertion chamfer
- 60: electrical line
- 62: voltage measuring device
- 64: pair of adjacent bipolar plates
- 66: electrical current
- 68: current measuring device
- 70: voltage signal
- 72: current signal
- 74: resistance signal
- 76: evaluation device
- 78: alarm signal
- 80: alarm device
- 82: analog-to-digital converter
- 84: signal
- 86: central control unit
- 88: transmission device

## Claims

1. Contact module (14, 14a, 14b, 14c) for monitoring a substack (18, 18a, 18b, 18c) of bipolar plates (4, 4a, 4b, 4c) of a fuel cell stack (10) that are stacked one above the other in a stacking direction (6),
with a plate contacting assembly (20) that is configured to electrically contact said bipolar plates (4, 4a, 4b, 4c) of said substack (18, 18a, 18b, 18c), and
with a measuring device (24) which is electrically connected to said plate contacting assembly (20) and which is configured to measure a differential voltage (28) between each two adjacent bipolar plates (4, 4a, 4b, 4c) of said substack (18, 18a, 18b, 18c) and to generate a voltage signal (70) that is representative of said differential voltage (28).

2. Contact module (14, 14a, 14b, 14c) according to claim 1,
wherein said plate contacting assembly (20) comprises at least one guide rubber (22).

3. Contact module (14, 14a, 14b, 14c) according to claim 1 or 2,
wherein said measuring device (24) is further configured to measure an electrical current (66) flowing between each two adjacent bipolar plates (4, 4a, 4b, 4c) of said substack (18, 18a, 18b, 18c) and to generate a current signal (72) that is representative of this electrical current (66).

4. Contact module (14, 14a, 14b, 14c) according to claim 3,
wherein said measuring device (24) is further configured to
- electrically short-circuit each two adjacent bipolar plates (4, 4a, 4b, 4c) of said substack (18, 18a, 18b, 18c) via regions (23) of said plate contacting assembly (20) that electrically contact these bipolar plates (4, 4a, 4b, 4c),
- generate said voltage signal (70) before or after short-circuiting said bipolar plates (4, 4a, 4b, 4c), and
- generate a resistance signal (74) from said voltage signal (70) generated before or after short-circuiting said bipolar plates (4, 4a, 4b, 4c) and said current signal (72) generated during short-circuiting that is representative of the electrical resistance of said electrically short-circuited bipolar plates (4, 4a, 4b, 4c) and/or said regions (23) of said plate contacting assembly (20) electrically contacting these bipolar plates (4, 4a, 4b, 4c).

5. Contact module (14, 14a, 14b, 14c) according to one of the claims 1 to 4,
with an evaluation device (76) that is configured to
- compare said voltage signal (70) with a permissible voltage value range, and/or
- compare said current signal (72) with a permissible current value range, and/or
- compare said resistance signal (74) with a permissible resistance value range.

6. Contact module (14, 14a, 14b, 14c) according to claim 5,
wherein the permissible voltage value range and/or the permissible current value range and/or the permissible resistance value range is stored in said evaluation device (76).

7. Contact module (14, 14a, 14b, 14c) according to claim 5 or 6,
wherein said evaluation device (76) is further configured to generate at least one alarm signal (78) when
- said voltage signal (70) is outside the permissible voltage value range, and/or
- said current signal (72) is outside the permissible current value range, and/or
- said resistance signal (74) is outside the permissible resistance value range.

8. Contact module (14, 14a, 14b, 14c) according to claim 7,
combined with an optical and/or acoustic alarm device (80) that is configured to be activated as a function of said at least one alarm signal (78).

9. Contact module (14, 14a, 14b, 14c) according to one of the claims 1 to 8,
wherein said contact module (14, 14a, 14b, 14c) comprises at least one analog-to-digital converter (82) that is configured to digitize at least one of said signals (84) from the following group of signals (84):
- said voltage signal (70);
- said current signal (72);
- said resistance signal; (74);
- said alarm signal (78).

10. Contact module (14, 14a, 14b, 14c) according to claim 9 in combination with one of the claims 5 to 8,
wherein said at least one analog-to-digital converter (82) is connected downstream of said evaluation device (76).

11. Contact module (14, 14a, 14b, 14c) according to claim 9 or 10,
with a transmission device (88) that is configured to wirelessly send said signals (84) digitized by said analog-to-digital converter (82).

12. Set (16) of contact modules (14, 14a, 14b, 14c),
with a first contact module (14, 14a) according to one of the claims 1 to 11 and
with a second contact module (14, 14b) according to one of the claims 1 to 11
wherein said first contact module (14, 14a) and said second contact module (14, 14b) are each configured to be arranged next to each other in a spatially mutually complementary manner.

13. Set (16) of contact modules (14, 14a, 14b) according to claim 12,
wherein a housing (30) of said first contact module (14, 14a) and a housing (30) of said second contact module (14, 14b) are configured and designed to be complementary at least in sections and are configured to overlap in at least one direction (36) extending perpendicular to said stacking direction (6).

14. Set (16) of contact modules (14, 14a, 14b, 14c) according to claim 12 or 13,
wherein said housing (30) of said first contact module (14, 14a) comprises at least one recess (34) in which at least one projection (32) of said housing (30) of said second contact module (14, 14b) can be received.

15. Fuel cell system (1)
with a stack (2) of bipolar plates (4, 4a, 4b, 4c) arranged one above the other in said stacking direction (6) and
with a set (16) according to one of the claims 12 to 14,
wherein said plate contacting assembly (20) of said first contact module (14, 14a) contacts said bipolar plates (4, 4a) of a first substack (18, 18a) of said bipolar plates (4, 4a, 4b, 4c), in an electrically conductively manner, and
wherein said plate contacting assembly (20) of said second contact module (14, 14b) contacts said bipolar plates (4, 4b) of a second substack (18, 18b) of said bipolar plates (4, 4a, 4b, 4c) in an electrically conductively manner,
wherein said first substack (18, 18a) and said second substack (18, 18b) comprise at least one common bipolar plate (4, 4a) that is contacted in an electrically conductively manner by said plate contacting assembly (20) of said first contact module (14, 14a) as well as by said plate contacting assembly (20) of said second contact module (14, 14b).
